# EUROPÄISCHE PATENTSCHRIFT

(11) **EP 1 293 320 B1**
(45) Veröffentlichungstag und Bekanntmachung des Hinweises auf die Patenterteilung: **31.08.2005**
(21) Anmeldenummer: 02015339.1
(22) Anmeldetag: 10.07.2002
(51) Int. Cl.: B29C 45/14

(54) **Spritzgiessfügeverfahren**
Method of joining by injection moulding
Procédé d'assemblage par injection

(30) Priorität: 13.09.2001 DE 10145090
(43) Veröffentlichungstag der Anmeldung: 19.03.2003
(73) Patentinhaber: Hachtel, Steffen, 73650 Winterbach (DE); Hachtel, Friedrich, 73431 Aalen (DE)
(72) Erfinder: Hachtel, Steffen, 73650 Winterbach (DE); Hachtel, Friedrich, 73431 Aalen (DE)
(74) Vertreter: Möbus, Daniela

(56) Entgegenhaltungen:
- DE-A- 2 623 415
- DE-U- 9 200 278
- FR-A- 1 343 123
- US-A- 4 226 577
- US-A- 4 451 421
- US-A- 4 505 659

## Beschreibung

Die Erfindung betrifft ein Spritzgießfügeverfahren zum Anbringen von technischen Funktionselementen aus thermoplastischem Kunststoff, insbesondere von End- und Verbindungsteilen an Seile, Schnüre oder Bänder nach dem Oberbegriff von Anspruch 1.

Mit solchen Verfahren werden beispielsweise Endstücke, Einhängehaken oder Kugeln an Schnüren aus Spinnfasern befestigt. Die Schnüre sind dabei in der Regel aus Kunststofffasern oder aber auch aus Naturfasern gesponnen oder geflochten. Bei diesen Verfahren, bei denen ein Umspritzen einer Schnur oder dergleichen mit technischen Kunststoffen, die mit hohen Forminnendrücken bis zu 800 bar und Temperaturen bis zu 350 °C verarbeitet werden, besteht das Problem, dass an der Abdichtkante kein Kunststoffmaterial austreten darf. Im Gegensatz zum konventionellen Spritzgießen kann im Bereich dieser Abdichtkante kein Touchieren der Formhälften mit einem hohen Formschließdruck zum Toleranzausgleich erfolgen, da dies eine Verletzung der Schnur oder des Bandes verursachen kann. Es ist also wichtig, die Schnur oder das Band exakt in die Kavität einzufädeln, was deswegen in aller Regel von Hand erfolgt.

Außerdem sind Kunststoffschnüre oder Bänder in sich flexibel, sodass sie unter einer definierten Vorspannung in die Kavität eingeführt werden müssen, um ein gleichmäßiges Umspritzen zu erreichen. Diese Vorspannung muss auch einstellbar sein, da die Schnüre und Bänder aufgrund ihrer Fertigung aus einzeln gesponnenen Kunststofffasern immer eine elastische und plastische Dehnung unter Last und Temperatur erleiden. Sollen also in einem definierten Abstand einzelne Funktionselemente angespritzt werden, so muss die Vorspannung diesem Dehnungsverhalten unter Last und Temperatur Rechnung tragen, also variiert werden können.

Aus der US 4,226,577 ist ein Spritzgießfügeverfahren bekannt geworden, bei dem ein Band in eine Spitzgießform, die zwei Teile aufweist, eingeführt wird, wobei in der Spritzgießform Funktionselemente an das Band angespritzt werden. Zusätzlich zu den Funktionselementen wird ein weiteres Element angespritzt, das verwendet wird, um das Band nach dem Spritzgießvorgang weiter zu transportieren. An dem weiteren Spritzgießteil ist außerdem ein Vorsprung angeformt, der für eine Positionierung des Bandes verwendet wird.

Aus der DE 26 23 415 A1 ist ein Verfahren zum automatischen Herstellen einer auf einem endlosen Träger aufgespritzten Perlenreihe aus Kunststoff bekannt geworden. Die Perlen werden verwendet, um den Träger nach dem Spritzgießvorgang weiter zu transportieren. Dafür werden Räder eingesetzt, die entsprechende Ausnehmungen für die Perlen aufweisen. Der Abstand zwischen zwei benachbarten Perlen, die in unterschiedlichen Spritzgießvorgängen hergestellt wurden, wird durch eine Justiervorrichtung einjustiert. Der vorliegenden Erfindung liegt die Aufgabe zugrunde, ein Verfahren der eingangs genannten Art vorzuschlagen, mit dem das Umspritzen von Schnüren, Seilen oder Bändern vollautomatisch und mit einem qualitativ einwandfreien Spritzergebnis auf konstruktiv einfache Weise möglich ist.

Die Aufgabe wird mit einem Spritzgießfügeverfahren mit den Merkmalen des Anspruchs 1 gelöst. Das vertikale Hindurchführen der Seile, Schnüre oder Bänder hat gegenüber einer horizontalen Verarbeitung den Vorteil, dass Dehnungsschwankungen des Seils, der Schnur oder des Bandes nicht zu einer Beeinträchtigung des Spritzergebnisses beispielsweise durch ein Durchhängen oder ein nicht mehr ganz exaktes automatisches Einfädeln führen können. Bei einer vertikalen Führung des Seils, der Schnur oder des Bandes durch die Spritzgießform kann außerdem die Vorspannung einfach durch Belastung des Seils, der Schnur oder des Bandes mit Gewichten erfolgen. Das Seil, die Schnur oder das Band können dabei von Vorratsrollen abgezogen werden, wodurch eine vollautomatische Verarbeitung ohne manuellen Eingriff möglich ist.

Weitere Vorteile ergeben sich, wenn die angespritzten Funktionselemente selbst zum Weitertransport der Schnur, des Seils oder des Bandes durch die Fertigungsanlage mit dem Spritzgießwerkzeug verwendet werden. Es lassen sich dann relativ einfache Transportmechanismen, wie Transportaufnahmen, die an den Funktionselementen angreifen, zum Weitertransport des Seils, der Schnur oder des Bandes einsetzen. Die Transportaufnahmen können dabei an einer rotierenden Vorrichtung angeordnet sein, sodass über die Rotationsgeschwindigkeit der Vorrichtung die Transportgeschwindigkeit der Schnur, des Seils oder des Bandes einstellbar ist. Gegenüber einem Greifer mit Linearantrieb hat eine solche rotierende Anordnung von Transportaufnahmen den Vorteil, dass einfach durch Veränderung der Rotationsgeschwindigkeit bzw. des eingestellten Drehwinkels eines Schrittmotors auch der gegenseitige Abstand der anzuspritzenden Funktionselemente konstruktiv sehr einfach variiert werden kann. Auch die Freigabe des Seils, der Schnur oder des Bandes erfolgt automatisch beim Weiterdrehen der Vorrichtung, die außerdem mit einer Ausstoßeinheit des Spritzgießwerkzeugs gekoppelt sein kann. Nach der Freigabe können die Schnüre, Seile oder Bänder mit den angespritzten Funktionselementen beispielsweise auf Rollen aufgewickelt werden. Die Schnüre, Seile oder Bänder können jedoch auch nach dem Anspritzen sofort geschnitten werden. Dazu kann eine Schweißvorrichtung eingesetzt werden, deren Schweißbalken vorzugsweise eine Temperatur zwischen 500 °C und 1500 °C aufweisen. Auch ein Abtrennen einzelner Seil- oder Bandabschnitte durch Ultraschallschweißen ist möglich.

Sowohl für die Seile, Schnüre und Bänder als auch für die Funktionselemente können unterschiedliche Materialien verwendet werden. So können die Seile, Schnüre oder Bänder aus gesponnenen, geflochtenen oder gewebten Kunstfasern wie Nylon oder Polyester mit oder ohne Kern hergestellt werden. Für die Funktionselemente kann ein thermoplastischer Kunststoff mit einem Schmelzpunkt zwischen 150 °C und 450 °C verwendet werden. Die Funktionselemente können auch aus unterschiedlichen Kunststoffen, die in einer Mehrkomponenten-Spritzgießmaschine verarbeitet werden, hergestellt werden. Beim Verwenden einer Mehrkomponenten-Spritzgießmaschine ist es auch möglich, unterschiedliche Volumen der Funktionselemente durch die Verwendung von unterschiedlichen Schneckenvolumen der Spritzaggregate zu realisieren. Damit kann an eine Schnur beispielsweise auf der einen Seite ein kleines Endstück und auf der anderen Seite ein großes Endstück angespritzt werden. Auch der Forminnendruck ist dabei für jedes Volumen in idealer Weise einstellbar.

Nachfolgend wird ein erfindungsgemäßes Verfahren anhand der beigefügten Zeichnung näher erläutert.

Es zeigen:
- Fig. 1: eine Seitenansicht auf einen Ausschnitt einer Anlage zur Durchführung eines erfindungsgemäßen Spritzgießfügeverfahrens;
- Fig. 2: eine Ansicht entlang der Linie II-II auf die Anlage aus Fig. 1.

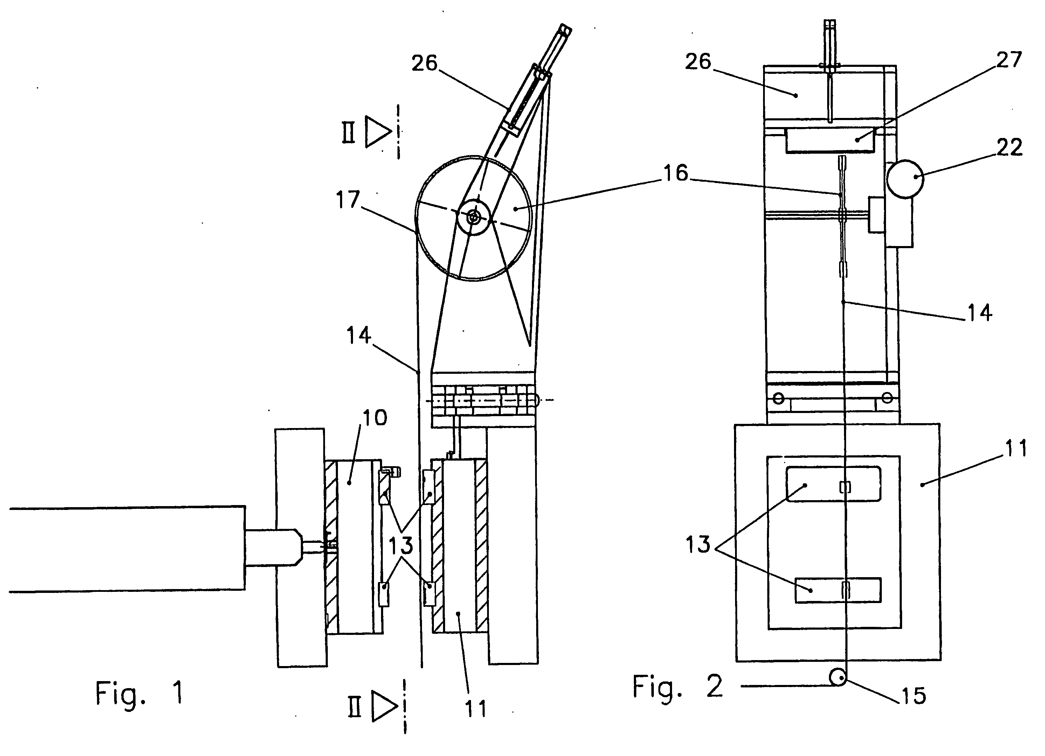

Fig. 1 zeigt zwei Spritzgießformhälften 10 und 11, die vertikal ausgerichtet sind. Durch die Kavität 13 des Spritzgießwerkzeugs 10, 11 wird ein Seil 14 (vgl. auch Fig. 2) hindurchgeführt, das über eine Umlenkrolle 15 (Fig. 2) von hier nicht näher dargestellten Seilrollen abgezogen wird. Oberhalb des Spritzgießwerkzeugs 10, 11 ist für das Seil 14 eine Drehscheibe 16 angeordnet, die mit Aufnahmen 17 zum Erfassen eines angespritzten Funktionselements versehen ist. Mit Hilfe der Drehscheibe 16 wird das Seil 14 vertikal durch das Spritzgießwerkzeug 10, 11 hindurchbewegt und dabei in vorgebbaren Abständen mit Kunststofffunktionselementen wie Kugeln, Endstücken oder dergleichen umspritzt. Die nötige Vorspannung des Seils 14 kann durch hier nicht dargestellte Gewichte, die auf das Seil 14 einwirken, erzeugt werden.

Von der Drehscheibe 16 aus kann das Seil 14 auf hier nicht näher dargestellte Rollen aufgewickelt werden. Es ist jedoch auch möglich, das Seil 14 in einzelne Abschnitte aufzutrennen. Hierzu ist oberhalb der Drehscheibe 16 eine Trennvorrichtung 26 mit einem beheizbaren Schweißbalken 27 angeordnet.

Der gegenseitige Abstand der Funktionselemente lässt sich mittels eines Schrittmotors 22 (Fig. 2) über die Rotationsgeschwindigkeit der Drehscheibe 16 einstellen, die für den Weitertransport des Seils 14 durch das Spritzgießwerkzeug 10, 11 verantwortlich ist.

## Patentansprüche

1. Spritzgießfügeverfahren zum Anbringen von technischen Funktionselementen aus thermoplastischem Kunststoff, insbesondere von End- und Verbindungsteilen, an Seile (14), Schnüre oder Bänder, wobei die Seile (14), Schnüre oder Bänder unter Vorspannung vertikal durch ein Spritzgießwerkzeug (10, 11) zum Anspritzen der Funktionselemente hindurchgeführt werden, **dadurch gekennzeichnet, dass** die angespritzten Funktionselemente zum Weitertransport der Seile (14), Schnüre oder Bänder durch die Fertigungsanlage mit dem Spritzgießwerkzeug (10, 11) verwendet, und Transportaufnahmen (17), die an den Funktionselementen angreifen, eingesetzt werden, wobei die Transportaufnahmen (17) an einer rotierenden Vorrichtung (16) angeordnet sind, und über die Rotationsgeschwindigkeit der Vorrichtung (16) die Transportgeschwindigkeit des Seils (14), der Schnur oder des Bandes, und der Abstand der Funktionselemente über den Drehwinkel eines Schrittmotors (22) oder die Rotationsgeschwindigkeit der rotierenden Vorrichtung eingestellt wird.

2. Verfahren nach Anspruch 1, **dadurch gekennzeichnet, dass** die Seile (14), Schnüre oder Bänder von Vorratsrollen abgezogen werden.

3. Verfahren nach Anspruch 1 oder 2, **dadurch gekennzeichnet, dass** die Vorspannung durch Belastung der Seile (14), Schnüre oder Bänder mit Gewichten erfolgt.

4. Verfahren nach Anspruch 3, **dadurch gekennzeichnet, dass** die Transportaufnahmen (17) auch zum Einfädeln der Seile (14), Schnüre oder Bänder in das Spritzgießwerkzeug (10, 11) und zum Entformen eingesetzt werden.

5. Verfahren nach einem der Ansprüche 1 bis 4, **dadurch gekennzeichnet, dass** die Seile (14), Schnüre oder Bänder nach dem Anspritzen der Funktionselemente auf Rollen aufgewickelt werden.

6. Verfahren nach einem der Ansprüche 1 bis 5, **dadurch gekennzeichnet, dass** die Seile (14), Schnüre oder Bänder nach dem Anspritzen der Funktionselemente geschnitten werden.

7. Verfahren nach Anspruch 6, **dadurch gekennzeichnet, dass** die Seile (14), Schnüre oder Bänder mit einer Schweißvorrichtung (26) geschnitten werden.

8. Verfahren nach Anspruch 7, **dadurch gekennzeichnet, dass** die Schweißvorrichtung (26) einen Schweißbalken (27), der auf eine Temperatur zwischen 500 °C und 1500 °C aufheizbar ist, aufweist.

9. Verfahren nach Anspruch 7, **dadurch gekennzeichnet, dass** das Schneiden der Seile (14), Schnüre oder Bänder durch Ultraschallschweißen erfolgt.

10. Verfahren nach einem der Ansprüche 1 bis 9, **dadurch gekennzeichnet, dass** der Transport des Seils (14), der Schnur oder des Bandes mit einer Transportvorrichtung (16, 17) durchgeführt wird, die mit einer Ausstoßeinheit des Spritzgießwerkzeugs (10, 11) gekoppelt ist.

11. Verfahren nach einem der Ansprüche 1 bis 10, **dadurch gekennzeichnet, dass** Seile (14), Schnüre oder Bänder aus gesponnenen, geflochtenen oder gewebten Kunstfasern wie Nylon oder Polyester, mit oder ohne Kern verwendet werden.

12. Verfahren nach einem der Ansprüche 1 bis 11, **dadurch gekennzeichnet, dass** für die Funktionselemente ein thermoplastischer Kunststoff mit einem Schmelzpunkt zwischen 150 °C und 450 °C verwendet wird.

13. Verfahren nach einem der Ansprüche 1 bis 12, **dadurch gekennzeichnet, dass** für die Funktionselemente unterschiedliche Kunststoffe verwendet werden, die in einer Mehrkomponenten-Spritzgießmaschine verarbeitet werden.

## Claims

1. Method of joining by injection moulding for attaching technical operational elements of thermoplastic material, in particular end and connection parts, to ropes (14), strings or tapes, and the ropes (14), strings or tapes are passed under pretension vertically through an injection moulding tool (10, 11) for the purpose of injection moulding said operational elements, **characterised in that** the injection moulded operational elements are used for onward transport of ropes (14), strings or tapes through the production plant with the injection moulding tool (10, 11), and transport pickups (17) are used which engage the operational elements, and the transport pickups (17) are arranged on a rotary device (16), and the transport speed of the rope (14), the string or the tape, and the distance of the operational elements above the rotary angle of a step motor (22) or the rotary speed of the rotary device is set via the rotary speed of the device (16).

2. Method according to Claim 1, **characterised in that** the ropes (14), strings or tapes are pulled off storage drums.

3. Method according to Claim 1 or 2, **characterised in that** pretensioning is carried out by loading the ropes (14), string or tapes by way of weights.

4. Method according to Claim 3, **characterised in that** the transport pickups (17) are also used for threading the ropes (14), strings or tapes into the injection moulding tool (10, 11) and for removal from the mould.

5. Method according to one of Claims 1 to 4, **characterised in that** the ropes (14), strings or tapes are wound up onto drums after the operational elements have been injection moulded.

6. Method according to one of Claims 1 to 5, **characterised in that** the ropes (14), strings or tapes are cut after injection moulding of the operational elements.

7. Method according to Claim 6, **characterised in that** the ropes (14), strings or tapes are cut by means of a welding device (26).

8. Method according to Claim 7, **characterised in that** the welding device (26) comprises a welding beam (27) which can be heated up to a temperature between 500°C and 1,500°C.

9. Method according to Claim 7, **characterised in that** the ropes (14), strings or tapes are cut by way of ultrasound welding.

10. Method according to one of Claims 1 to 9, **characterised in that** the transport of the rope (14), string or tape is carried out with a transport device (16, 17) which is coupled to an ejection unit of the injection moulding tool (10, 11).

11. Method according to one of Claims 1 to 10, **characterised in that** ropes (14), strings or tapes of spun, plaited or woven synthetic fibres such as nylon or polyester, with or with core, are used.

12. Method according to one of Claims 1 to 11, **characterised in that** a thermoplastic material with a melting point between 150°C and 450°C is used for the operational elements.

13. Method according to one of Claims 1 to 12, **characterised in that** different plastic materials which are processed in a multicomponent injection moulding machine are utilised for the operational elements.

## Revendications

1. Procédé d'assemblage par moulage par injection pour fixer des éléments fonctionnels techniques en matière synthétique thermoplastique, en particulier des pièces d'extrémité et de liaison, à des câbles (14), des fils ou des bandes, les câbles (14), fils ou bandes défilant sous précontrainte, verticalement, à travers un moule pour injection (10, 11) pour enrober les éléments fonctionnels, **caractérisé en ce que** les éléments fonctionnels enrobés sont utilisés pour l'acheminement des câbles (14), fils ou bandes à travers l'installation de fabrication avec le moule pour injection (10, 11), et des logements de transport (17) agissant sur les éléments fonctionnels étant mis en oeuvre, les logements de transport (17) étant ménagés sur un dispositif rotatif (16), et la vitesse de transport du câble (14), du fil ou de la bande est réglée par l'intermédiaire de la vitesse de rotation du dispositif (16), et l'écartement des éléments fonctionnels est réglée par l'intermédiaire de l'angle de rotation d'un moteur pas à pas (22) ou de la vitesse de rotation du dispositif rotatif.

2. Procédé selon la revendication 1, **caractérisé en ce que** les câbles (14), fils ou bandes sont dévidés à partir de bobines de réserve.

3. Procédé selon la revendication 1 ou 2, **caractérisé en ce que** la précontrainte s'effectue en sollicitant les câbles (14), fils ou bandes avec des poids.

4. Procédé selon la revendication 3, **caractérisé en ce que** les logements de transport (17) sont aussi utilisés pour enfiler les câbles (14), fils ou bandes dans le moule pour injection (10, 11) et pour le démoulage.

5. Procédé selon l'une des revendications 1 à 4, **caractérisé en ce que**, après l'enrobage des éléments fonctionnels, les câbles (14), fils ou bandes sont enroulés sur des bobines.

6. Procédé selon l'une des revendications 1 à 5, **caractérisé en ce que**, après l'enrobage des éléments fonctionnels, les câbles (14), fils ou bandes sont coupés.

7. Procédé selon la revendication 6, **caractérisé en ce que** les câbles (14), fils ou bandes sont coupés par un dispositif de soudage (26).

8. Procédé selon la revendication 7, **caractérisé en ce que** le dispositif de soudage (26) comporte une barre de soudage (27) qui peut être chauffée à une température entre 500 °C et 1 500 °C.

9. Procédé selon la revendication 7, **caractérisé en ce que** la coupe des câbles (14), fils ou bandes s'effectue par soudage ultrasonique.

10. Procédé selon l'une des revendications 1 à 9, **caractérisé en ce que** le transport du câble (14), du fil ou de la bande est réalisé avec un dispositif de transport (16, 17) qui est couplé à une unité d'éjection du moule pour injection (10, 11).

11. Dispositif selon l'une des revendications 1 à 10, **caractérisé en ce que** les câbles (14), fils ou bandes utilisés sont en fibres synthétiques filées, tressées ou tissés, telles que du nylon ou du polyester, avec ou sans noyau.

12. Procédé selon l'une des revendications 1 à 11, **caractérisé en ce que**, pour les éléments fonctionnels, on utilise une matière synthétique thermoplastique avec un point de fusion entre 150 °C et 450 °C.

13. Procédé selon l'une des revendications 1 à 12, **caractérisé en ce que**, pour les éléments fonctionnels, on utilise différentes matières synthétiques qui sont transformées dans une machine de moulage par injection à plusieurs composants.
